# EUROPEAN PATENT SPECIFICATION

(11) **EP 2 312 674 B1**
(45) Date of publication and mention of the grant of the patent: **14.11.2012**
(21) Application number: 10177827.2
(22) Date of filing: 21.09.2010
(51) Int. Cl.: H01M 2/20

(54) **Interconnector for batteries**
Batterieverbinder
Interconnecteur de batteries

(30) Priority: 05.10.2009 US 248839 P; 31.08.2010 US 872252
(43) Date of publication of application: 20.04.2011
(73) Proprietor: SB LiMotive Co., Ltd., Yongin-si Gyeonggi-do (KR)
(72) Inventor: Kim, Sung-Bae, Gyeonggi-do (KR); Kim, Yong-Sam, Gyeonggi-do (KR); Byun, Sang-Won, Gyeonggi-do (KR); Kim, Hyo-Seob, Gyeonggi-do (KR)
(74) Representative: Gulde Hengelhaupt Ziebig & Schneider

(56) References cited:
- EP-A1- 2 204 863
- JP-A- 2002 151 045
- US-A1- 2009 123 830
- M. HAMEDI, H. PASHAZADEH: "Numerical study of nugget formation in resistance spot welding", INTERNATIONAL JOURNAL OF MECHANICS, vol. 2, no. 1, 2008, pages 11-15, XP002611466,

## Description

### Field of the Invention

The present invention relates to a battery module. More particularly, the present invention relates to a battery module of which the structure for electrically connecting rechargeable batteries is improved.

### Description of the Related Art

Rechargeable batteries can be charged and discharged, unlike primary batteries that cannot be charged. Small capacity rechargeable batteries are used for small portable electronic devices such as mobile phones, laptop computers, and camcorders, while large capacity batteries are widely used as power sources for driving motors of hybrid vehicles, etc.

Recently, high power battery modules using a high energy density non-aqueous electrolyte have been developed, and the high power battery modules are formed as large-capacity battery modules by connecting a plurality of rechargeable batteries in series to be used for driving the motors of electric vehicles, etc.

Further, one large capacity rechargeable battery is generally composed of a plurality of rechargeable batteries connected in series, in which the rechargeable battery may be formed in a cylindrical shape or a prismatic shape.

Prismatic rechargeable batteries include a case having an electrode assembly in which an positive electrode and a negative electrode are disposed with a separator therebetween, and a space where the electrode assembly is disposed, a cap plate sealing the case and having a terminal hole where an electrode terminal is inserted, and an electrode terminal that is electrically connected with the electrode assembly and protrudes outside the case through the terminal hole.

The electrode terminal is fixed to the cap plate by a nut, but there is a problem in that the nut is loosened by continuous external vibration or shock. This problem causes contact resistance inside the rechargeable batteries, such that the output and cycle-life of the rechargeable batteries are reduced.

A method of connecting a connecting member to the positive electrode and the negative electrode using resistance welding has been proposed to overcome the problem.

In general, the positive electrode terminal is made of aluminum and the negative electrode terminal is made of copper, but it is difficult to form the connecting member using the same material as the positive electrode terminal and the negative electrode terminal. When the connecting member is made of a different material from that of the positive electrode terminal or the negative electrode terminal, there is a problem in that it is difficult to connect the connecting member to the terminals using resistance welding or ultrasonic welding.

US 2009/123830 A1 discloses an inter-battery connecting device for connecting terminals of two batteries. In here, a connecting member is being connected to a terminal by resistance welding.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a battery module having advantages of easily and stably connecting a connecting member with terminals.

According to the invention, a battery module is provided comprising a plurality of rechargeable batteries, and a connecting member for connecting a first electrode terminal of a first rechargeable battery comprising a first material with a second electrode terminal of a second rechargeable battery comprising a second material. Welding portions are further provided connecting the connecting member to the first electrode terminal and the second electrode terminal, wherein at least the welding portions to one of the first or second electrode terminal are formed by friction stir welding and comprises a nugget zone. The nugget zone comprises a mixture of the materials of the connecting member and the respective first or second electrode terminal.

The nugget zone formed in the welding portion is an area where dynamic recrystallization is generated, such that it has a structure that resists external vibration or shock.

When the connecting member is bonded to the terminals by friction stir welding, solid-state bonding is achieved such that the connecting member and the terminals, which may have different melting points, can be stably bonded. Accordingly, not only the output of the battery module is improved, but bonding cycle-life of the connecting member and the terminals is improved, such that the overall cycle-life of the battery module is improved. Since dynamic recombination is generated, it is possible to prevent solidification cracks that may be formed in fuse bonding, and there is little deformation, such that mechanical properties are excellent. By friction stir welding it is possible to stably bond different metals.

The nugget zone extends across the boundary line between the connecting member and the respective first or second electrode terminal.

The connecting member may comprise a uniform, homogeneous material.

Additionally or alternatively, the connecting member may comprise a material different from the material of the first or second electrode terminal.

The first electrode terminal is preferably made of a different material than the second electrode terminal, and the connecting member preferably comprises the same material as the first electrode terminal or the same material as the second electrode terminal.

In a preferred embodiment, friction stir welding is only performed to the terminal having a different material than the connecting member. The other connection may be formed by other welding processes.

The first electrode terminal preferably comprises aluminum and the second electrode terminal comprises copper.

The connecting member preferably comprises aluminum or copper. Copper is more preferred than aluminum since it has a higher melting point.

The connecting member preferably has the form of a plate covering the first electrode terminal and the second electrode terminal.

The welding portions to at least one of the first or second electrode terminal may be spot-welds extending from the surface of the connecting member opposite to the surface where the connecting member contacts the first or second terminal, respectively. Alternatively, the welding portions to at least one of the first or second electrode terminal may be line-welds formed along contacting side surfaces of the connecting member and the respective first or second electrode terminal.

The welding portion may comprise a welding groove formed in the surface of the connecting member. The welding portion may have a cone or truncated cone like shape.

The at least one of the first and second electrode terminal preferably comprises a terminal protrusion, and the connecting member comprises a corresponding support groove sized and located to receive the terminal protrusion.

Since the terminal protrusions are inserted in the support grooves, the terminals and the connecting member are stably bonded

The welding portions are formed at locations corresponding to the location of a respective terminal protrusion and support groove.

The welding portion preferably further comprises at least one of a thermo-mechanically affected zone around the nugget zone, in which deformation of the material of the connecting member and the respective first or second electrode terminal is distributed at an angle with respect to the surface of the connecting member; and a heat affected zone around the thermo-mechanically affected zone.

It is further provided a method of connecting a first electrode terminal of a first rechargeable battery with a second electrode terminal of a second rechargeable battery, the method comprising the steps of providing a connecting member comprising a different material than the material of the first and/or second electrode terminal, respectively; and connecting the connecting member to the first and second electrode terminal, wherein the connecting member is connected to at least one of the first or second electrode terminal by friction stir welding.

The friction stir welding connecting step may comprise forming a nugget zone which comprises a mixture of the materials of the connecting member and the respective first or second electrode terminal by melding the connecting member and the respective first or second electrode terminal while in a solid state by friction heat and stirring, and dynamic recrystallization of the melded portion.

According to the present invention, with a decrease of contact resistance, the output of the battery module is improved, and the cycle-life of the rechargeable batteries is also improved.

### BRIEF DESCRIPTION OF THE DRAWINGS

FIG. 1 is a perspective view showing a battery module according to the first exemplary embodiment of the present invention;
FIG. 2 is a partial perspective view of the battery module according to the first exemplary embodiment of the present invention;
FIG. 3 is a cross-sectional view taken along the line III-III of FIG. 2;
FIG. 4 is a perspective view showing a portion of a battery module according to the second exemplary embodiment of the present invention;
FIG. 5 is an exploded perspective view showing a portion of a battery module according to the third exemplary embodiment of the present invention; and
FIG. 6A and FIG. 6B are cross-sectional views illustrating a process of welding a connecting member with a terminal of the battery module according to the third exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

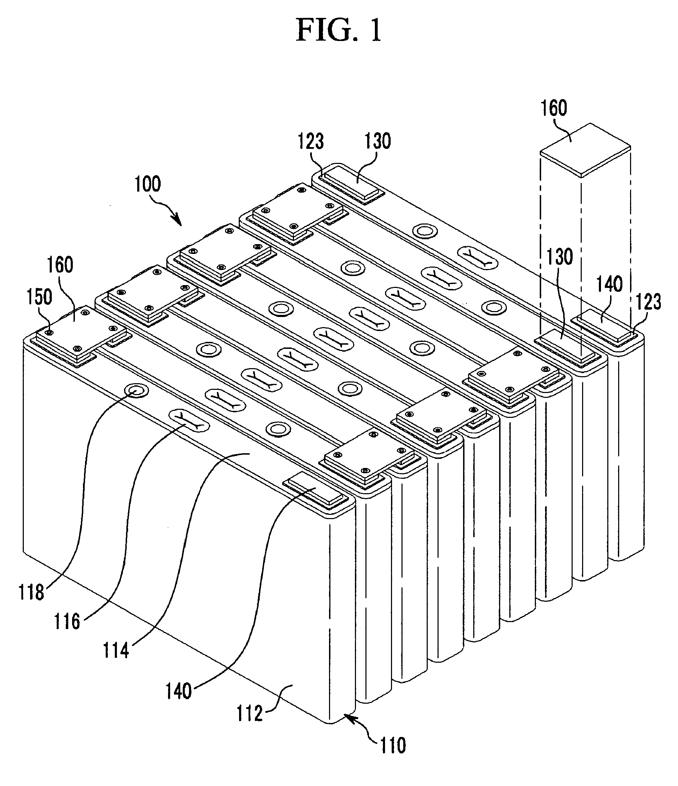

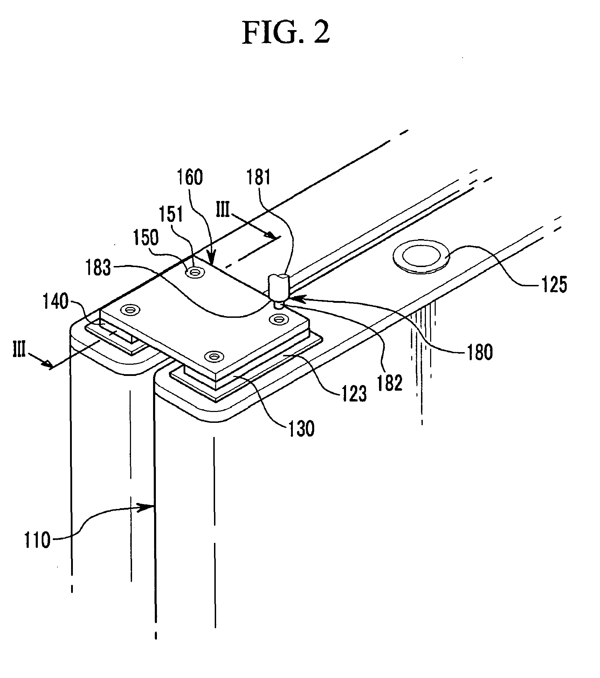

FIG. 1 is a perspective view of a battery module according to the first exemplary embodiment of the present invention, and FIG. 2 is a partial perspective view of the battery module according to the first exemplary embodiment of the present invention.

Referring to FIG. 1 and FIG. 2, a battery module 100 according to the present exemplary embodiment includes a plurality of rechargeable batteries 110 having a positive electrode terminal 130 and a negative electrode terminal 140, and connecting members 160 that electrically connect the rechargeable batteries 110.

The battery module 100 according to the present exemplary embodiment is formed by connecting the rechargeable batteries 110 in series. However, the present invention is not limited thereto, and the rechargeable batteries 110 may be connected in parallel.

The rechargeable battery 110 according to the present exemplary embodiment is formed in a prismatic shape and includes a case 112, a cap plate 114 connected to the opening of the case 112, and the positive electrode terminal 130 and the negative electrode terminal 140 that protrude outside the case 112. Although the prismatic rechargeable battery is exemplified in the present exemplary embodiment, the present invention is not limited thereto, and the battery may be formed in a cylindrical shape or other shapes.

The terminals 130 and 140 are fixed to the cap plate 114 while protruding outside the cap plate 114, and a gasket 123 for insulating and sealing is disposed between the cap plate 114 and the terminals 130 and 140, respectively. The positive electrode terminal 130 and the negative electrode terminal 140 are formed substantially in a plate shape, and are electrically connected to an electrode assembly (not shown) inserted in the case 112. Further, the positive electrode terminal 130 is made of aluminum and the negative electrode terminal 140 is made of copper.

A vent member 116 that is opened when the internal pressure increases and a sealing cap 118 that seal an electrolyte injection inlet are disposed on the cap plate 114.

The rechargeable batteries 110 arranged in parallel with each other are connected in series by the connecting members 160, in which the positive electrode terminals 130 and the negative electrode terminals 140 of adjacent rechargeable batteries 110 are alternately disposed and the connecting member 160 is welded to the positive electrode terminal 130 of one rechargeable battery 110 and the negative electrode terminal of the adjacent rechargeable battery 110.

The connecting member 160 is formed in a plate shape and disposed on the positive electrode terminal 130 and the negative electrode terminal 140 to cover the positive electrode terminal 130 and the negative electrode terminal 140. The connecting member 160 is bonded to the positive electrode terminal 130 and the negative electrode terminal 140 by friction stir welding.

With the connecting member 160 covering the terminals 130 and 140, a welding portion 150 is formed by rotating a tool 180 to recrystallize the structure using dynamic flow, and welding the connecting member 160 and the terminal 130 and 140. The tool 180 has a pin 182 and a shank 181 where the pin 182 is fixed, and the cross-section where the pin 182 protrudes from the shank 181 is called a shoulder 183.

The connecting member 160 and the terminals 130 and 140 are bonded by spot welding, in which a portion where the shoulder 183 contacts the connecting member 160 is the welding portion 150 and a welding groove 151 is formed at the portion where the pin 182 has been inserted of the welding portion 150.

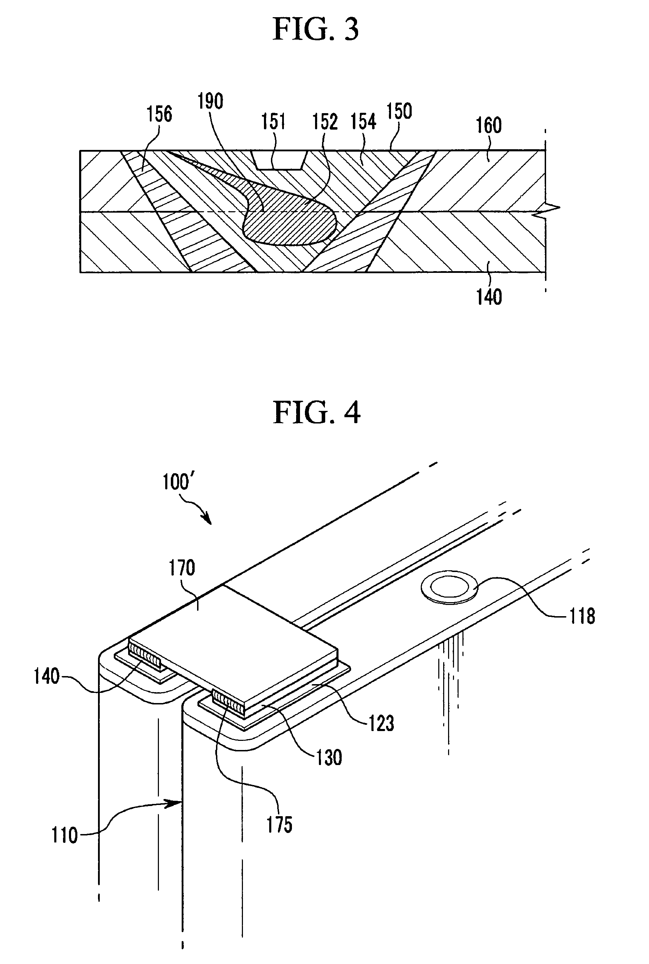

As shown in FIG. 3, a nugget zone 152 that is formed by dynamic recrystallization, a thermo-mechanically affected zone (TMAZ) 154, and a heat affected zone (HAZ) 156 are formed in the welding portion 150.

The nugget zone 152 is a portion where recovery and recrystallization occur due to high heat and the amount of deformation, such that the nugget zone 152 is also called a dynamic-recrystallized portion. Unlike general welding in which melting occurs by heat, the nugget zone 152 is formed by dynamic recrystallization of a material melded in a solid state by friction heat and stirring. In a nugget zone 152, molecules of two different materials mix with each other and the boundary line between the connecting member 160 and the terminal 130, 140 disappears in that area. If a virtual boundary line 190 between the lower surface of the connecting member 160 and the top surface of the terminal 130, 140 in the region of overlap would be drawn, the nugget zone 152 extends vertically across and horizontally along this virtual boundary line 190. The nugget zone 152 has preferably the shape of a nugget. The diameter of the nugget zone 152 is larger than the diameter of the pin 182 and smaller than the diameter of the shoulder 183. The size of the nugget zone 152 is changed by the rotational speed of the tool, and when the rotational speed is too high, the size of the nugget zone 152 is reduced. Further, when the rotational speed is too high, the shape of the crystal is incomplete and defects may occur at the incomplete portion.

The thermo-mechanically affected zone 154 is a portion where partial recrystallization occurs by plastic deformation caused by friction at a contact surface where the shoulder 183 of the tool contacts the connecting member 160, and where thermal deformation by friction and mechanical deformation by the shoulder 183 simultaneously occur. Crystals softened by excessive plastic flow and deformation of the material are distributed at an angle in the thermo-mechanically affected zone 154. The thermo-mechanically affected zone 154 is provided around the nugget zone 152.

The heat affected zone 156 is more affected by heat than the thermo-mechanically affected zone 154, in which slanting crystals, i.e. crystals formed on the slant shown in Fig. 3, exist and a plurality of air holes is formed. That is, the heat affected zone 156 extends at an angle from the top surface of the connecting member in Fig. 3 to the bottom surface. The heat affected zone 156 delimits the thermo-mechanically affected zone 154 to the left and the right of the welding portion 150 in Fig. 3.

When the connecting member 160 is bonded by friction stir welding, as in the present exemplary embodiment, it is possible to easily bond the negative electrode terminal 140 made of copper and the positive electrode terminal 130 made of aluminum, using the connecting member 160 made of aluminum. Copper and aluminum have different melting points, such that when they are bonded by resistance welding or ultrasonic welding there is high possibility that defects occur in the welding portion 150, or the welding portion may be separated by external shock or vibration. In particular, when a battery module is used in electric vehicles or hybrid electric vehicles, vibration is continuously transmitted to the connecting member 160 such that the continuous vibration causes contact defects between the connecting member 160 and the terminals 130 and 140.

However, when the connecting member 160 is bonded to the terminals 130 and 140 by friction stir welding, as in the present exemplary embodiment, solid-state bonding is achieved such that the connecting member 160 and the terminals 130 and 140, which have different melting points, can be stably bonded. Accordingly, not only the output of the battery module 100 is improved, but bonding cycle-life of the connecting member 160 and the terminals 130 and 140 is improved, such that the overall cycle-life of the battery module 100 is improved.

In particular, the nugget zone 152 formed at the center of the welding portion 150 is an area where dynamic recrystallization is generated, such that it has a structure that resists external vibration or shock. Further, the thermo-mechanically affected zone 154, which is an area where two connecting members 160 and the terminals 130 and 140 are rotated and bonded, has mixed parent metals, such that it has a structural characteristic that resists external shock and vibration.

Further, the friction stir welding does not need a heat source, a welding rod, and filler metal, unlike other welding, such that it is environment-friendly welding that does not discharge harmful light or substances. Further, since dynamic recombination is generated, it is possible to prevent solidification cracks that may be formed in fuse bonding, and there is little deformation, such that mechanical properties are excellent.

FIG. 4 is a perspective view showing a battery module according to the second exemplary embodiment of the present invention.

Referring to FIG. 4, a battery module 100' according to the present exemplary embodiment includes a plurality of rechargeable batteries 110 and connecting members 170 electrically connecting the rechargeable batteries 110. The battery module 100' according to the present exemplary embodiment has the same structure as the battery module 100' according to the first exemplary embodiment, except for the configuration of the welding portion 175, such that repeated description of the same configuration is not provided.

The rechargeable battery 110 has a positive electrode terminal 130 and a negative electrode terminal 140 that are formed in a plate shape protruding outside a case. The connecting member 170 is formed substantially as a rectangular plate and disposed to cover, preferably fully cover the positive electrode terminal 130 and the negative electrode terminal 140. The connecting member 170 is bonded to the positive electrode terminal 130 and the negative electrode terminal 140 by friction stir welding, and a welding portion 175 is formed at the sides of the connecting member 170 and the terminals 130 and 140.

The connecting member 170 and the terminals 130 and 140 are welded to each other where the side surfaces of the connecting member 170 and the terminals 130, 140 contact each other, and a tool performs welding while moving along the side surfaces of the terminals 130 and 140, such that the welding portion 175 is formed in a line.

By welding the side surfaces of the connecting member 170 and the terminals 130 and 140 using friction stir welding as in the present exemplary embodiment, it is possible to stably bond different metals.

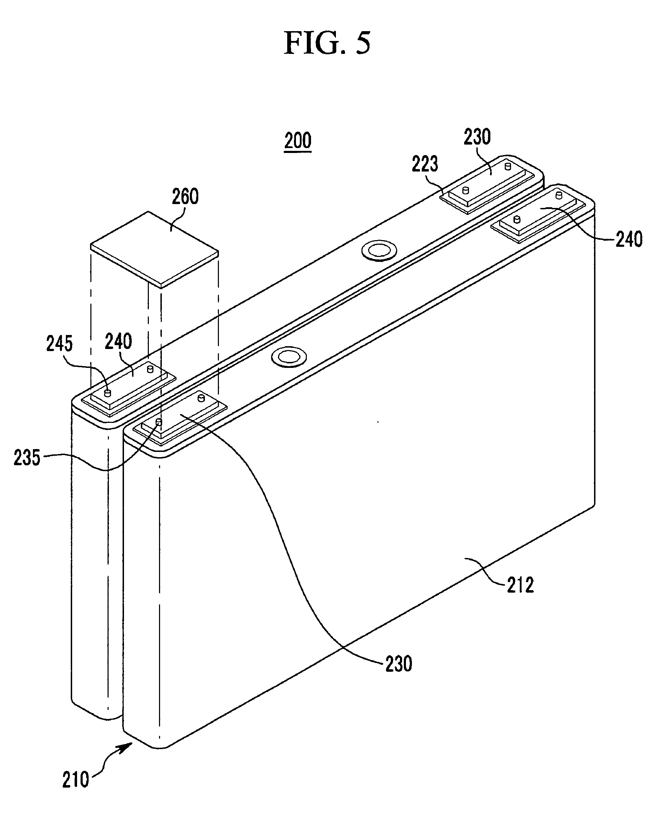

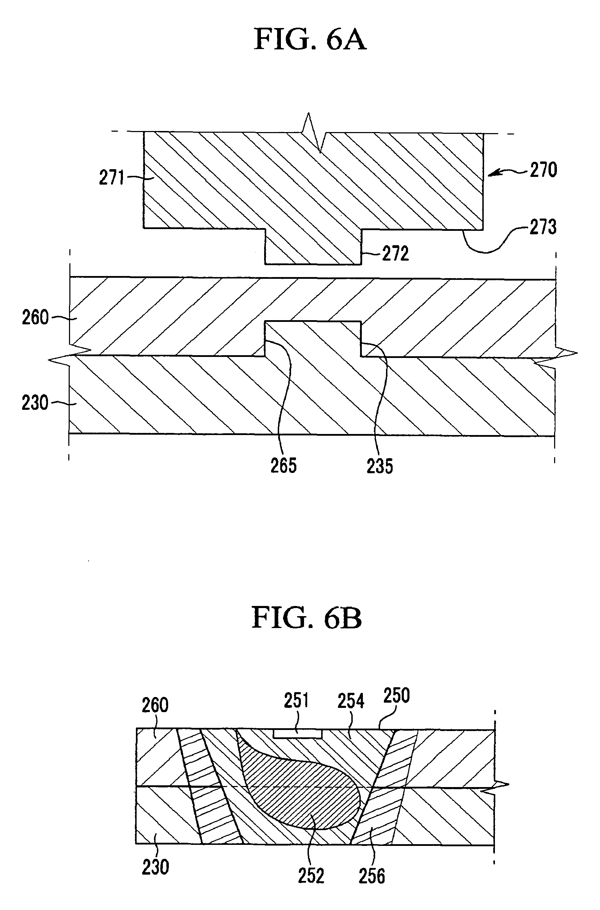

FIG. 5 is an exploded perspective view showing a battery module according to the third exemplary embodiment of the present invention, and FIG. 6A and FIG. 6B are cross-sectional views illustrating a process of welding a terminal and a connecting member according to the third exemplary embodiment of the present invention.

Referring to FIG. 5, FIG. 6A and FIG. 6B a battery module 200 according to the present exemplary embodiment includes a plurality of rechargeable batteries 210 and connecting members 260 electrically connecting the rechargeable batteries 210. The battery module 200 according to the present exemplary embodiment has the same structure as the battery module according to the first exemplary embodiment, except for the structure of terminals 230 and 240 and the connecting member 260, such that repeated description for the same configurations is not provided.

The rechargeable battery 210 has a positive electrode terminal 230 and a negative electrode terminal 240 formed in a plate shape protruding outside a case 212. Two terminal protrusions 235 are formed on the upper surface of the positive electrode terminal 230, and two terminal protrusions 245 are formed on the upper surface of the negative electrode terminal 240.

The connecting member 260 is formed substantially in a rectangular plate and disposed to cover the positive electrode terminal 230 and the negative electrode terminal 240. Further, support grooves 265 are formed on the lower surface of the connecting member 260, and the terminal protrusions 235 and 245 of the terminals 230 and 240 are inserted in the support grooves 265.

As shown in FIG. 6A and FIG. 6B, in this state, the connecting member 260 and the terminals 230 and 240 are bonded by friction stir welding, using a tool 270. First, the tool 270 having a pin 272 and a shank 271 is disposed above the connecting member 270. The pin 272 protrudes from a shoulder 273 at the lower end of the shank 271. By pressing the connecting member 260 and the terminals 230 and 240 and rotating the tool 270, the connecting member 260 and the terminals 230 and 240 are bonded in a solid state by friction heat and stirring. Accordingly, a welding portion 250 and a welding groove 251 are formed.

In this state, since the terminal protrusions 235 are inserted in the support grooves 265, as the terminal protrusions 235 are stirred, the terminals 230 and 240 and the connecting member 260 are stably bonded. That is, even if heat and friction force cannot influence the lower portions of the terminals 230 and 240, the terminal protrusions 235 are dynamically recombined with the connecting member 260 by the heat and friction force, such that the connecting member 260 and the terminals 230 and 240 can be stably bonded.

A nugget zone 252 that is formed by dynamic recrystallization, a thermo-mechanically affected zone 254 where partial recrystallization is generated by plastic deformation, and a heat affected zone 256 that is affected by heat are formed in the welding portion 250. The nugget zone 252 is formed where the terminal protrusion 235 is fitted in the support groove 265.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A battery module comprising:
a plurality of rechargeable batteries (110), and
a connecting member (160, 170, 260) for connecting a first electrode terminal (130) of a first rechargeable battery comprising a first material with a second electrode terminal (140) of a second rechargeable battery comprising a second material,
**characterized in that**
welding portions (150, 175, 250) are provided connecting the connecting member (150, 175, 250) to the first electrode terminal and the second electrode terminal (130, 140), wherein at least the welding portions (150, 175, 250) to one of the first or second electrode terminal (130, 140) are formed by friction stir welding and comprises a nugget zone (152, 252), which comprises a mixture of the materials of the connecting member (160, 170, 260) and the respective first or second electrode terminal (130, 140).

2. Battery module of claim 1, wherein the nugget zone (152, 252) extends across the boundary line (190) between the connecting member (160, 170, 260) and the respective first or second electrode terminal (130, 140).

3. Battery module of one of the previous claims, wherein the connecting member (160, 170, 260) comprises:
a uniform material; and/or
a material different from the material of the first or second electrode terminal (130, 140).

4. Battery module of one of the previous claims, wherein:
the first electrode terminal (130) is made of a different material than the second electrode terminal (140), and
the connecting member (160, 170, 260) comprises the same material as the first electrode terminal (130) or the same material as the second electrode terminal (140).

5. Battery module of claim 4, wherein the first electrode terminal (130) comprises aluminum and the second electrode terminal (140) comprises copper.

6. Battery module of claim 5, wherein the connecting member (160, 170, 260) comprises aluminum or copper.

7. Battery module of one of the previous claims, wherein the connecting member (160, 170, 260) has the form of a plate covering the first electrode terminal (130) and the second electrode terminal (140).

8. Battery module of one of the previous claims, wherein
the welding portions (150, 250) to at least one of the first or second electrode terminal (130, 140) are spot-welds extending from the surface of the connecting member (160, 260) opposite to the surface where the connecting member (160, 260) contacts the first or second terminal (130, 140), respectively; or
the welding portions (175) to at least one of the first or second electrode terminal (130, 140) are line-welds formed along contacting side surfaces of the connecting member (170) and the respective first or second electrode terminal (130, 140).

9. Battery module of any of the previous claims, wherein the welding portion (150, 175, 250):
comprises a welding groove (151,251) formed in the surface of the connecting member (160, 170, 260), and/or
has a cone or truncated cone like shape.

10. Battery module of one of the previous claims, wherein at least one of the first and second electrode terminal (130, 140) comprises a terminal protrusion (245), and the connecting member (260) comprises a corresponding support groove (245) sized and located to receive the terminal protrusion (245).

11. Battery module of claim 10, wherein the welding portions (250) are formed at locations corresponding to the location of a respective terminal protrusion (245) and support groove (245).

12. Battery module of one of the previous claims, wherein the welding portion (150, 175, 250) further comprises at least one of:
a thermo-mechanically affected zone (154, 254) around the nugget zone (152, 252), in which deformation of the material of the connecting member (160, 170, 260) and the respective first or second electrode terminal (130, 140) is distributed at an angle with respect to the surface of the connecting member (160, 170, 260); and
a heat affected zone (156, 256) around the thermo-mechanically affected zone (154, 254).

13. Method of connecting a first electrode terminal (130) of a first rechargeable battery (110) with a second electrode terminal (140) of a second rechargeable battery (110), the method comprising the steps of:
providing a connecting member (160, 170, 260) comprising a different material than the material of the first and/or second electrode terminal (130, 140), respectively; and
connecting the connecting member (160, 170, 260) to the first and second electrode terminal (140), wherein
the connecting member (160, 170, 260) is connected to at least one of the first or second electrode terminal (130, 140) by friction stir welding.

14. Method of claim 13, wherein the friction stir welding connecting step comprises forming a nugget zone (152, 252) which comprises a mixture of the materials of the connecting member (160, 170, 260) and the respective first or second electrode terminal (130, 140) by:
welding the connecting member (160, 170, 260) and the respective first or second electrode terminal (130, 140) while in a solid state by friction heat and stirring, and
dynamic recrystallization of the welded portion.

## Patentansprüche

1. Batteriemodul, umfassend:
eine Vielzahl wiederaufladbarer Batterien (110), und
ein Verbindungsglied (160, 170, 260) zum Verbinden einer ersten Elektrodenklemme (130) einer ersten wiederaufladbaren Batterie umfassend ein erstes Material mit einer zweiten Elektrodenklemme (140) einer zweiten wiederaufladbaren Batterie umfassend ein zweites Material,
**dadurch gekennzeichnet, dass**
Schweißabschnitte (150, 175, 250) vorgesehen sind, die das Verbindungsglied (150, 175, 250) mit der ersten Elektrodenklemme und der zweiten Elektrodenklemme (130, 140) verbinden, wobei mindestens die Schweißabschnitte (150, 175, 250) zu einer der ersten oder zweiten Elektrondenklemme (130, 140) mittels Rührreibschweißen ausgebildet sind und eine Linsenzone (152, 252) aufweisen, die ein Gemisch aus den Materialien des Verbindungsgliedes (160, 170, 260) und der jeweiligen ersten oder zweiten Elektrodenklemme (130, 140) umfasst.

2. Batteriemodul nach Anspruch 1, wobei sich die Linsenzone (152, 252) über die Grenzlinie (190) zwischen dem Verbindungsglied (160, 170, 260) und der jeweiligen ersten oder zweiten Elektrodenklemme (130, 140) erstreckt.

3. Batteriemodul nach einem der vorstehenden Ansprüche, wobei das Verbindungsglied (160, 170, 260) umfasst:
ein gleichartiges Material; und/oder
ein sich von dem Material der ersten oder zweiten Elektrodenklemme (130, 140) unterscheidendes Material.

4. Batteriemodul nach einem der vorstehenden Ansprüche, wobei
die erste Elektrodenklemme (130) aus einem unterschiedlichen Material besteht als die zweiten Elektrodenklemme (140), und
das Verbindungsglied (160, 170, 260) dasselbe Material umfasst wie die erste Elektrodenklemme (130) oder dasselbe Material wie die zweiten Elektrodenklemme (140).

5. Batteriemodul nach Anspruch 4, wobei die erste Elektrodenklemme (130) Aluminium und die zweite Elektrodenklemme (140) Kupfer umfasst.

6. Batteriemodul nach Anspruch 5, wobei das Verbindungsglied (160, 170, 260) Aluminium oder Kupfer umfasst.

7. Batteriemodul nach einem der vorstehenden Ansprüche, wobei das Verbindungsglied (160, 170, 260) die Form einer die erste Elektrodenklemme (130) und die zweite Elektrodenklemme (140) bedeckenden Platte aufweist.

8. Batteriemodul nach einem der vorstehenden Ansprüche, wobei
die Schweißabschnitte (150, 250) zu mindestens einer der ersten oder zweiten Elektrodenklemme (130, 140) Schweißpunkte sind, die sich von der Fläche des Verbindungsgliedes (160, 260) erstrecken, die der Fläche gegenüberliegt, wo das Verbindungsglied (160, 260) die erste bzw. zweite Klemme (130, 140) kontaktiert; oder
die Schweißabschnitte (175) zu mindestens einer der ersten oder zweiten Elektrodenklemme (130, 140) Schweißlinien sind, die entlang sich kontaktierender Seitenflächen des Verbindungsgliedes (170) und der jeweiligen ersten oder zweiten Elektrodenklemme (130, 140) ausgebildet sind.

9. Batteriemodul nach einem der vorstehenden Ansprüche, wobei der Schweißabschnitt (150, 175, 250)
eine Schweißfuge (151, 251) umfasst, die in der Fläche des Verbindungsgliedes (160, 170, 260) ausgebildet ist, und/oder
kegelförmig oder kegelstumpfförmig ist.

10. Batteriemodul nach einem der vorstehenden Ansprüche, wobei mindestens eine der ersten und zweiten Elektrodenklemme (130, 140) einen Klemmenvorsprung (245) aufweist und das Verbindungsglied (260) eine entsprechende Halteaussparung (265) umfasst, die so bemessen und angeordnet ist, dass sie den Klemmenvorsprung (245) aufnimmt.

11. Batteriemodul nach Anspruch 10, wobei die Schweißabschnitte (250) an Positionen ausgebildet sind, die der Position eines entsprechenden Klemmenvorsprungs (245) und einer Halteausnehmung (265) entsprechen.

12. Batteriemodul nach einem der vorstehenden Ansprüche, wobei der Schweißabschnitt (150, 175, 250) ferner mindestens eines aus folgenden umfasst:
eine thermisch-mechanisch beeinflusste Zone (154, 254) um die Linsenzone (152, 252) herum, in der sich die Deformation des Materials des Verbindungsgliedes (160, 170, 260) und der jeweiligen ersten oder zweiten Elektrodenklemme (130, 140) in einem Winkel bezüglich der Fläche des Verbindungsgliedes (160, 170, 260) verteilt;
und
eine wärmebeeinflusste Zone (156, 256) um die thermisch-mechanisch beeinflusste Zone (154, 254) herum.

13. Verfahren zum Verbinden einer ersten Elektrodenklemme (130) einer ersten wiederaufladbaren Batterie (110) mit einer zweiten Elektrodenklemme (140) einer zweiten wiederaufladbaren Batterie (110), wobei das Verfahren folgende Schritte umfasst:
Vorsehen eines Verbindungsgliedes (160, 170, 260) umfassend ein unterschiedliches Material als das Material der ersten und/oder zweiten Elektrodenklemme (130, 140); und
Verbinden des Verbindungsgliedes (160, 170, 260) mit der ersten und zweiten Elektrodenklemme (140), wobei
das Verbindungsglied (160, 170, 260) mit mindestens einer der ersten oder zweiten Elektrodenklemme (130, 140) mittels Rührreibschweißen verbunden wird.

14. Verfahren nach Anspruch 13, wobei der Schritt des Verbindens mittels Rührreibschweißen das Ausbilden einer Linsenzone (152, 252) umfasst, die ein Gemisch aus den Materialien des Verbindungsgliedes (160, 170, 260) und der jeweiligen ersten oder zweiten Elektrodenklemme (130, 140) umfasst, durch:
Verschweißen des Verbindungsgliedes (160, 170, 260) und der jeweiligen ersten oder zweiten Elektrodenklemme (130, 140) im festen Zustand mittels Reibungswärme und Rühren, und
dynamische Rekristallisierung des Schweißabschnitts.

## Revendications

1. Module de batterie comprenant :
une pluralité de batteries rechargeables (110), et
un élément de connexion (160, 170, 260) pour connecter une première borne d'électrode (130) d'une première batterie rechargeable comprenant un premier matériau à une deuxième borne d'électrode (140) d'une deuxième batterie rechargeable comprenant un deuxième matériau,
**caractérisé en ce que** :
des parties de soudage (150, 175, 250) sont prévues pour connecter l'élément de connexion (150, 175, 250) à la première borne d'électrode et à la deuxième borne d'électrode (130, 140), au moins les parties de soudage (150, 175, 250) à l'une de la première ou de la deuxième borne d'électrode (130, 140) étant formées par soudage par friction-malaxage et comprenant une zone de noyau (152, 252), qui comprend un mélange des matériaux de l'élément de connexion (160, 170, 260) et de la première ou de la deuxième borne d'électrode respective (130, 140).

2. Module de batterie de la revendication 1, dans lequel la zone de noyau (152, 252) s'étend à travers la ligne de délimitation (190) entre l'élément de connexion (160, 170, 260) et la première ou la deuxième borne d'électrode respective (130, 140).

3. Module de batterie de l'une des revendications précédentes, dans lequel l'élément de connexion (160, 170, 260) comprend :
un matériau uniforme ; et/ou
un matériau différent du matériau de la première ou de la deuxième borne d'électrode (130, 140).

4. Module de batterie de l'une des revendications précédentes, dans lequel :
la première borne d'électrode (130) est réalisée en un matériau différent de celui de la deuxième borne d'électrode (140), et
l'élément de connexion (160, 170, 260) comprend le même matériau que celui de la première borne d'électrode (130) ou le même matériau que celui de la deuxième borne d'électrode (140).

5. Module de batterie de la revendication 4, dans lequel la première borne d'électrode (130) comprend de l'aluminium et la deuxième borne d'électrode (140) comprend du cuivre.

6. Module de batterie de la revendication 5, dans lequel l'élément de connexion (160, 170, 260) comprend de l'aluminium ou du cuivre.

7. Module de batterie de l'une des revendications précédentes, dans lequel l'élément de connexion (160, 170, 260) a la forme d'une plaque couvrant la première borne d'électrode (130) et la deuxième borne d'électrode (140).

8. Module de batterie de l'une des revendications précédentes, dans lequel :
les parties de soudage (150, 250) à au moins l'une de la première ou de la deuxième borne d'électrode (130, 140) sont des soudures par points s'étendant à partir de la surface de l'élément de connexion (160, 260) opposée à la surface où l'élément de connexion (160, 260) entre en contact avec la première ou la deuxième borne (130, 140), respectivement ; ou
les parties de soudage (175) à au moins l'une de la première ou de la deuxième borne d'électrode (130, 140) sont des soudures en ligne formées le long de surfaces latérales de contact de l'élément de connexion (170) et de la première ou de la deuxième borne d'électrode respective (130, 140).

9. Module de batterie de l'une des revendications précédentes, dans lequel la partie de soudage (150, 175, 250) :
comprend une rainure de soudage (151, 251) formée dans la surface de l'élément de connexion (160, 170, 260), et/ou
a une forme d'un cône ou d'un cône tronqué.

10. Module de batterie de l'une des revendications précédentes, dans lequel au moins l'une de la première et de la deuxième borne d'électrode (130, 140) comprend une protubérance (245) de borne, et l'élément de connexion (260) comprend une rainure de support correspondante (245) dimensionnée et placée de manière à recevoir la protubérance (245) de borne.

11. Module de batterie de la revendication 10, dans lequel les parties de soudage (250) sont formées à des emplacements correspondant à l'emplacement d'une protubérance (245) de borne et d'une rainure de support (245) respectives.

12. Module de batterie de l'une des revendications précédentes, dans lequel la partie de soudage (150, 175, 250) comprend en outre au moins l'une :
d'une zone affectée thermo-mécaniquement (154, 254) autour de la zone de noyau (152, 252), où la déformation du matériau de l'élément de connexion (160, 170, 260) et de la première ou de la deuxième borne d'électrode respective (130, 140) est distribuée à un certain angle par rapport à la surface de l'élément de connexion (160, 170, 260) ; et
d'une zone affectée par la chaleur (156, 256) autour de la zone affectée thermo-mécaniquement (154, 254).

13. Procédé de connexion d'une première borne d'électrode (130) d'une première batterie rechargeable (110) à une deuxième borne d'électrode (140) d'une deuxième batterie rechargeable (110), le procédé comprenant les étapes qui consistent :
à fournir un élément de connexion (160, 170, 260) comprenant un matériau différent du matériau de la première et/ou de la deuxième borne d'électrode (130, 140), respectivement ; et
à connecter l'élément de connexion (160, 170, 260) à la première et à la deuxième borne d'électrode (140),
l'élément de connexion (160, 170, 260) étant connecté à au moins l'une de la première ou de la deuxième borne d'électrode (130, 140) par soudage par friction-malaxage.

14. Procédé de la revendication 13, dans lequel l'étape de connexion par soudage par friction-malaxage comprend le fait de former une zone de noyau (152, 252) qui comprend un mélange des matériaux de l'élément de connexion (160, 170, 260) et de la première ou de la deuxième borne d'électrode respective (130, 140), par :
soudage de l'élément de connexion (160, 170, 260) et de la première ou de la deuxième borne d'électrode respective (130, 140) lorsqu'ils sont à l'état solide par friction-malaxage et par chaleur de friction, et
recristallisation dynamique de la partie soudée.
